(19) Europäisches Patentamt / European Patent Office / Office européen des brevets

(11) **EP 4 097 503 B1**

(12) **FASCICULE DE BREVET EUROPEEN**

(45) Date de publication et mention
de la délivrance du brevet:
**24.12.2025 Bulletin 2025/52**

(21) Numéro de dépôt: **21707325.3**

(22) Date de dépôt: **26.01.2021**

(51) Classification Internationale des Brevets (IPC):
**G01S 7/481** *(2006.01)* **G02B 26/08** *(2006.01)*
**G01S 7/499** *(2006.01)* **G01S 17/88** *(2006.01)*

(52) Classification Coopérative des Brevets (CPC):
**G02B 27/01; G01S 7/497; G01S 17/931; G02B 1/11**

(86) Numéro de dépôt international:
**PCT/FR2021/050142**

(87) Numéro de publication internationale:
**WO 2021/152256 (05.08.2021 Gazette 2021/31)**

(54) **PROCÉDÉ D'ANALYSE D'UN VITRAGE POUR UN LIDAR**

**VERFAHREN ZUM ANALYSIEREN EINER GLASUR FÜR EINEN LIDAR**

**METHOD FOR ANALYSING A GLASING FOR A LIDAR**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **31.01.2020 FR 2000955**

(43) Date de publication de la demande:
**07.12.2022 Bulletin 2022/49**

(73) Titulaire: **Saint-Gobain Sekurit France
60150 Thourotte (FR)**

(72) Inventeur: **MIMOUN, Emmanuel
92100 Boulogne-Billancourt (FR)**

(74) Mandataire: **Saint-Gobain Recherche
41 Quai Lucien Lefranc
93300 Aubervilliers (FR)**

(56) Documents cités:
**EP-A2- 2 518 529     US-A1- 2015 185 313
US-A1- 2018 313 940**

**Description**

**DOMAINE TECHNIQUE DE L'INVENTION**

Le domaine technique de l'invention est celui des LIDARs et plus particulièrement celui des LIDARs émettant des ondes lumineuses à travers un vitrage de véhicule.

La présente invention concerne un procédé d'analyse d'un vitrage pour une correction destinée à être utilisée par un LIDAR associé au vitrage et en particulier un procédé d'analyse d'un vitrage pour une correction destinée à être utilisée par un LIDAR configuré pour émettre des ondes lumineuses à travers le vitrage.

**ARRIERE-PLAN TECHNOLOGIQUE DE L'INVENTION**

Dans l'industrie automobile, il est connu d'utiliser un LIDAR (pour « LIght Detection And Ranging ») comme système d'aide à la conduite, et plus particulièrement pour détecter les obstacles situés à proximité du véhicule et évaluer la distance entre le véhicule et chaque obstacle. Pour cela, le LIDAR est intégré à l'intérieur du véhicule, le plus souvent derrière le pare-brise, comme décrit dans le document WO2018115090.

Pour détecter un objet et évaluer la position de cet objet, un LIDAR émet une onde lumineuse dans la direction de l'objet et mesure le temps de propagation aller-retour de l'onde lumineuse. Or, il est connu que la présence d'un vitrage sur la trajectoire de l'onde lumineuse du fait de la distorsion, engendre des erreurs dans l'évaluation de la position de l'objet par le LIDAR.

Classiquement, ces erreurs sont corrigées en calibrant le LIDAR déjà installé derrière le vitrage en utilisant des mires de calibration. Dans le document DE102017003634, le LIDAR est calibré en utilisant une mire fluorescente permettant de filmer les points d'intersection entre la mire et les ondes lumineuses émises par le LIDAR.

Cependant, une telle solution rajoute une étape longue et coûteuse lors du contrôle qualité du véhicule et a recours à un matériel dédié et contraignant car encombrant et utilisant des mires particulières ayant des tolérances géométriques à contrôler.

Il existe donc un besoin de corriger les erreurs d'évaluations de positions réalisées par un LIDAR en remédiant aux inconvénients précités.

**RESUME DE L'INVENTION**

L'invention offre une solution aux problèmes évoqués précédemment, en permettant d'obtenir une carte de corrections angulaires pour un LIDAR, en remédiant aux inconvénients précités.

Un premier aspect de l'invention concerne un procédé d'analyse d'un vitrage d'un véhicule pour une correction destinée à être utilisée pour un LIDAR configuré pour émettre des ondes lumineuses, le vitrage comportant une surface libre interne vers l'intérieur du véhicule et une surface libre externe vers l'extérieur du véhicule, chaque onde lumineuse étant destinée à traverser le vitrage et étant définie par un point d'impact donné sur la surface libre interne, la surface libre interne définissant un plan de surface ayant une inclinaison donnée par rapport à un plan horizontal comportant un axe horizontal, l'axe horizontal étant perpendiculaire à un axe vertical et à un axe normal compris dans le plan de surface, le procédé comportant les étapes suivantes :

- pour chaque point d'un ensemble de points du vitrage :

  - détermination d'une épaisseur locale du vitrage au dit point ;
  - obtention par traitement numérique, d'une pente locale horizontale et d'une pente locale verticale au dit point, à partir de l'épaisseur locale au dit point ;
  - calcul d'un décalage angulaire vertical en fonction d'une composante verticale d'un angle d'émission de l'onde lumineuse destinée à traverser le vitrage au dit point, de la pente locale verticale au dit point et de l'inclinaison du vitrage ;
  - calcul d'un décalage angulaire horizontal en fonction d'une composante horizontale d'un angle d'émission de l'onde lumineuse destinée à traverser le vitrage au dit point, de la pente locale horizontale au dit point et de l'inclinaison du vitrage ;

- établissement d'une carte de corrections angulaires comportant, pour chaque point de l'ensemble de points, le décalage angulaire vertical et le décalage angulaire horizontal calculés pour ledit point.

Grâce à l'invention, une carte de corrections angulaires répertoriant, pour une pluralité de points du vitrage, le décalage angulaire induit par des défauts de planéité du vitrage à une hypothétique onde lumineuse émise par un LIDAR traversant le vitrage, est calculée. Cette carte de corrections angulaires peut ensuite être utilisée par un LIDAR pour corriger son estimation de la position d'un objet connaissant l'angle d'émission et donc le point du vitrage à travers lequel passe l'onde lumineuse qui est réfléchie sur l'objet.

Le procédé selon l'invention permet une calibration du LIDAR avant son installation, puisqu'aucune onde lumineuse n'a besoin d'être émise par le LIDAR, ce qui permet l'obtention des corrections angulaires avant l'installation du LIDAR. Le procédé peut donc être mis en œuvre par le fournisseur du vitrage, ce qui épargne une méthode de calibration longue et coûteuse à l'utilisateur final du véhicule. En outre, le procédé n'a recours à aucun outillage qui serait uniquement dédié à l'obtention des corrections angulaires, mais uniquement à des dispositifs connus pour d'autres applications.

Outre les caractéristiques qui viennent d'être évoquées dans le paragraphe précédent, le procédé selon un premier aspect de l'invention peut présenter une ou plusieurs caractéristiques complémentaires parmi les suivantes, considérées individuellement ou selon toutes les combinaisons techniquement possibles.

Selon l'invention, le procédé comporte avantageusement en outre une étape de complétion de la carte de corrections angulaires par calcul du décalage angulaire vertical et du décalage angulaire horizontal d'une pluralité de points du vitrage n'appartenant pas à l'ensemble de points, le calcul étant réalisé à partir de pentes locales horizontales et de pentes locales verticales obtenues par interpolation à partir des pentes locales horizontales et des pentes locales verticales calculées pour l'ensemble de points.

Ainsi, même si les points d'impact des ondes lumineuses émises par le LIDAR sur la surface libre interne ne coïncident pas avec l'ensemble de points, la carte de corrections angulaire comporte une correction angulaire pour chaque point d'impact.

Selon l'invention, chaque point de l'ensemble de points est de préférence espacé d'un autre point de l'ensemble de points d'au plus 1mm ou mieux d'au plus 100 μm selon l'axe horizontal et/ou d'au plus 100nm ou mieux d'au plus 10nm selon l'axe normal. L'espacement peut être régulier ou non, plus ou moins dense.

De préférence, l'ensemble de points est choisi de manière à couvrir tous les éventuels défauts de planéité du vitrage.

Selon l'invention, l'ensemble de points est choisi de préférence de manière à couvrir une zone inscrite dans le vitrage, ayant une dimension selon l'axe horizontal d'au moins 1 cm et une dimension selon l'axe normal d'au moins 1 cm.

Ainsi, l'ensemble de points est choisi de manière à couvrir une zone convenant pour le bon fonctionnement du LIDAR.

Notamment, la zone inscrite dans le vitrage a une largeur au moins centimétrique et de préférence d'au plus 25 cm ou mieux d'au plus 15 cm, encore mieux d'au plus 5 cm.

Ainsi, la dimension de la zone inscrite dans le vitrage peut correspondre à la dimension d'un trou du vitrage (trou dans un verre interne d'un vitrage feuilleté comme décrit ultérieurement par exemple), par exemple dimension d'au moins 80 ou 90% de la dimension du trou.

Selon une réalisation, l'étape de détermination de l'épaisseur locale est réalisée par une mesure directe d'épaisseur ou par différenciation d'une première mesure de surface réalisée sur la surface libre interne du vitrage et d'une seconde mesure de surface réalisée sur la surface libre externe du vitrage.

Selon une 'alternative de la réalisation précédente, l'étape de détermination de l'épaisseur locale est réalisée par mesure optique sans contact.

Selon une variante de réalisation précédente, l'étape de détermination de l'épaisseur locale est réalisée par mesure de front d'onde, déflectométrie ou profilométrie confocale.

Selon une variante, l'étape de détermination de l'épaisseur locale est réalisée par mesure de distorsion optique en transmission.

Ainsi, la première étape du procédé est réalisée à l'aide de dispositifs couramment utilisés pour effectuer des mesures optiques pouvant être utilisés dans de nombreux domaines, comme par exemple un analyseur de front d'onde.

Selon l'invention, le décalage angulaire vertical et le décalage angulaire horizontal sont calculés de préférence par les formules suivantes :

$$\begin{cases} \delta_v = A_{vv}\varepsilon_v + A_{hv}\varepsilon_h \\ \delta_h = A_{vh}\varepsilon_v + A_{hh}\varepsilon_h \end{cases}$$

Avec $A_{vv}$, $A_{hv}$, $A_{vh}$, $A_{hh}$, des coefficients dépendant de la composante verticale et de la composante horizontale de l'angle d'émission de l'onde lumineuse destinée à traverser le vitrage au dit point et de l'inclinaison du vitrage.

Ainsi, le décalage angulaire vertical et le décalage angulaire horizontal sont calculés de manière suffisamment précise pour corriger les évaluations de positions d'objets réalisées par le LIDAR.

En particulier, les formules correspondent aux approximations au premier ordre de l'équation de la réfraction appliquée à la face interne du vitrage et de l'équation de la réfraction appliquée à la face externe du vitrage s'écrivant :

$$\begin{cases} \vec{s_2} = -\dfrac{1}{n}\vec{N_1} \wedge \left(\vec{N_1} \wedge \vec{s_1}\right) - \sqrt{1 - \dfrac{1}{n^2}\left\|\vec{N_1} \wedge \vec{s_1}\right\|^2}\,\vec{N_1} \\[4mm] \vec{s_3} = -n\vec{N_2} \wedge \left(\vec{N_2} \wedge \vec{s_2}\right) - \sqrt{1 - n^2\left\|\vec{N_2} \wedge \vec{s_2}\right\|^2}\,\vec{N_2} \end{cases}$$

Avec :

- $\vec{N_1}$, le vecteur normal à la face interne du vitrage au dit point ;
- $\vec{N_2}$, le vecteur normal à la face externe du vitrage au dit point ;
- $\vec{s_1}$, la direction de l'onde lumineuse avant son passage à travers le vitrage ;
- $\vec{s_2}$, la direction de l'onde lumineuse après son passage à travers la face interne du vitrage ;
- $\vec{s_3}$, la direction de l'onde lumineuse après son passage à travers la face interne puis la face externe du vitrage ;
- n, l'indice de réfraction du vitrage.

Notamment, les coefficients $A_{vv}$, $A_{hv}$, $A_{vh}$, $A_{hh}$ sont calculés par une méthode analytique en particulier sans avoir à résoudre d'équations différentielles, par exemple à l'aide d'un outil de calcul matriciel tel que numpy ou matlab.

Selon l'invention, les étapes décrites précédemment (pour la calibration du LIDAR) de détermination de l'épaisseur locale, d'obtention des pentes locales horizontale et verticale, de calcul d'un décalage angulaire vertical, de calcul d'un décalage angulaire horizontal et d'établissement d'une carte de corrections angulaires et même l'étape optionnelle de complétion de la carte de corrections angulaires sont réalisées avant installation du LIDAR en définissant un point d'impact de référence théorique associé à un angle d'émission de référence.

Une fois la calibration faite du LIDAR, ce dernier est installé est mis en fonctionnement (allumé) et on souhaite vérifier la coïncidence et si nécessaire procéder à un recalage,

Selon l'invention, le procédé comprend de préférence une étape de formation d'un point de mise en référence sur la surface libre interne du vitrage sous forme d'un marquage (ou repère) correspondant au point d'impact de référence théorique.

Ainsi, une étape ultérieure de mise en coïncidence est facilitée.

Selon une première réalisation, si, après l'installation du LIDAR, il existe un décalage entre le point de mise en référence et un point d'impact de référence réel d'une onde lumineuse émise à l'angle d'émission de référence par le LIDAR, le procédé comporte une étape de mise en coïncidence du point d'impact de référence réel et du point de mise en référence.

Ainsi, la position du LIDAR est ajustée pour correspondre à une position de référence pour ne pas introduire de décalages dans la carte de corrections d'erreurs angulaires. Cette étape de coïncidence éventuelle ne nécessite pas d'outil complexe supplémentaire, ni d'espace, voire même d'intervention. Elle peut se faire automatiquement.

Selon une réalisation, l'étape de mise en coïncidence est réalisée via un mécanisme de fixation du LIDAR sur le véhicule. La fixation est déjà référencée donc la mise en coïncidence est instantanée une fois le LIDAR fixé.

Selon une variante de réalisation, si, après l'installation du LIDAR, il existe un décalage entre le point de mise en référence et un point d'impact de référence réel d'une onde lumineuse émise à l'angle d'émission de référence par le LIDAR, le procédé comporte une étape de recalage de la carte de corrections angulaires par application d'une translation.

Ainsi, la carte de corrections angulaires est adaptée à la position réelle du LIDAR pour ne pas avoir à modifier le positionnement du LIDAR.

En particulier, la translation a une valeur égale à l'écart entre la position du point de mise en référence et la position du point d'impact de référence sur la surface libre interne du vitrage.

Selon l'invention, pour une onde lumineuse ayant un angle d'émission donné, la composante x selon l'axe horizontal et la composante y' selon l'axe normal de la position sur le vitrage d'un point du vitrage traversé par l'onde lumineuse sont calculées par les formules suivantes :

$$\begin{cases} x = \dfrac{\cos\theta \tan\alpha_h}{\sin\theta \tan\alpha_v + \cos\theta} \\[4mm] y' = \dfrac{\sin\alpha_v}{\cos(\theta - \alpha_v)} \end{cases}$$

Un deuxième aspect de l'invention concerne un vitrage de véhicule apte à laisser passer des ondes lumineuses émises par un LIDAR, notamment (provhe) infrarouge, le vitrage comportant un moyen de stockage configuré pour stocker une carte de corrections angulaires établie via le procédé selon le premier aspect de l'invention pour le vitrage.

Selon une alternative de réalisation, le moyen de stockage est une matrice de données ou un code-barre qui renvoie à une base de données. Par exemple, le moyen de stockage se présente par exemple sous la forme d'une matrice de données, appelée également « datamatrix ». Le moyen de stockage peut également se présenter sous la forme d'un code-barre, par exemple un « flash code », un « TAGs », un « QR code » qui renvoie à une base de données. Naturellement, le moyen de stockage peut se présenter sous une autre forme, par exemple un disque dur, un serveur de stockage ou encore une mémoire électronique.

De préférence, le moyen de stockage est sur le vitrage. Ce peut être un dépôt, un film (collé).

Le moyen de stockage (par exemple une couche) peut être en particulier imprimé sur le vitrage 201. L'impression est par exemple réalisée par gravure et/ou par impression par jet d'encre.

Ainsi, cela permet de fournir au LIDAR la bonne carte de corrections angulaires.

Notamment, le moyen de stockage est transparent ou visible sous certaines conditions, et/ou le vitrage comporte une zone recouverte d'un élément opaque et le moyen de stockage est dans une épargne réalisée dans la zone recouverte de l'élément opaque (notamment en périphérie, comme une bande de masquage en émail ou autre moyen opaque notamment noir).

Ainsi, le moyen de stockage est discret.

Selon l'invention, le vitrage est par exemple un vitrage feuilleté comportant un verre externe, un intercalaire de feuilletage et un verre interne.

Ainsi, la transmission lumineuse et la sécurité est améliorée.

En particulier, le vitrage feuilleté comporte au moins un trou traversant dans le verre interne voire même un trou dans l'intercalaire de feuilletage.

Ainsi, le trou permet de transmettre et/ou collecter efficacement et sélectivement l'ensemble des ondes lumineuses traversant le vitrage.

Un troisième aspect de l'invention concerne un système comportant un vitrage selon le deuxième aspect de l'invention et un LIDAR configuré pour émettre des ondes lumineuses traversant le vitrage.

Selon une alternative de réalisation, le vitrage comprend un point de mise en référence sous forme d'un marquage.

Ainsi, il est plus facile de régler la position du LIDAR lors de son installation ou lors de l'étape de mise en coïncidence.

Un quatrième aspect de l'invention concerne un véhicule comportant un vitrage selon le deuxième aspect de l'invention ou un système selon le troisième aspect de l'invention.

Selon une alternative de réalisation, le vitrage est un pare-brise.

L'invention et ses différentes applications seront mieux comprises à la lecture de la description qui suit et à l'examen des figures qui l'accompagnent.

## BREVE DESCRIPTION DES FIGURES

Les figures sont présentées à titre indicatif et nullement limitatif de l'invention.

- La figure 1 montre une représentation schématique d'un LIDAR émettant une onde lumineuse traversant un vitrage de véhicule.
- La figure 2 montre une représentation schématique d'un vitrage de véhicule en vue de coupe.
- La figure 3 montre une représentation schématique en vue de coupe du trajet d'une onde lumineuse émise par un LIDAR à travers un vitrage de véhicule.
- La figure 4 donne la valeur de coefficients $A_{vv}$, $A_{hv}$, $A_{vh}$, $A_{hh}$ en fonction de la composante verticale de l'angle d'émission d'une onde lumineuse et de la composante horizontale de l'angle d'émission de l'onde lumineuse pour un vitrage incliné de 30° par rapport à un axe horizontal.
- La figure 5 montre une représentation schématique d'un ensemble de points d'un vitrage de véhicule pour lesquels des corrections angulaires ont été calculés par le procédé selon le premier aspect de l'invention.
- La figure 6 est un schéma synoptique illustrant l'enchaînement des étapes d'un procédé selon le premier aspect de l'invention.
- La figure 7 illustre un exemple de points d'impact d'ondes lumineuses émises par un LIDAR sur une surface libre interne d'un vitrage.
- La figure 8 montre une représentation schématique d'une étape de mise en coïncidence d'un procédé selon le premier aspect de l'invention.
- La figure 9 montre une représentation schématique d'un vitrage en vue de face.

## DESCRIPTION DETAILLEE

Sauf précision contraire, un même élément apparaissant sur des figures différentes présente une référence unique.

Un premier aspect de l'invention concerne un procédé de détermination de corrections angulaires destinées à être utilisées par un LIDAR.

On entend par « LIDAR », un dispositif permettant d'évaluer la position d'un objet en émettant une onde lumineuse dans la direction de l'objet et en mesurant le temps de propagation aller-retour de l'onde lumineuse réfléchie sur l'objet.

Chaque onde lumineuse est émise par le LIDAR à une longueur d'onde se situant préférentiellement dans le domaine proche infrarouge en particulier dans une gamme allant de 800nm à 1800nm, notamment $905\pm5$nm et/ou $1550\pm5$nm et/ou encore $850\pm5$nm. De préférence le facteur de transmission à ladite ou lesdites longueurs d'onde (du LIDAR) est d'au moins 70% ou 80%.

Le LIDAR est destiné à être installé à l'intérieur d'un véhicule de manière que les ondes lumineuses émises par le LIDAR traversent un vitrage du véhicule avant d'être réfléchies sur les objets dont on souhaite estimer la position à l'aide du LIDAR. Autrement dit, le LIDAR et l'objet dont on souhaite évaluer la position grâce au LIDAR sont situés de part et d'autre du vitrage de véhicule.

Par « vitrage », on entend une plaque formée à partir d'un matériau transparent tel que du verre ou encore du plastique. La plaque formant le vitrage peut comporter une unique feuille en matériau transparent ou une pluralité de feuilles en matériau transparent ; on parle alors de vitrage feuilleté.

Le vitrage est par exemple un vitrage feuilleté (et de préférence bombé) de véhicule notamment routier (voiture, camion, transport en commun : bus, car etc.) ou ferroviaire (en particulier à vitesse maximale d'au plus 90 km/h ou d'au plus 70 km/h, en particulier les métros, tramway), en particulier un pare-brise, ou encore une lunette arrière, voire un vitrage latéral, d'épaisseur E1 donnée, par exemple subcentimétrique, notamment d'au plus 5 mm pour un pare-brise de véhicule routier, en particulier de voiture.

Le vitrage comporte :

- une première feuille de verre, notamment bombée, destinée à être le vitrage extérieur, avec une première face principale externe F1 et une deuxième face principale interne F2 (orientée vers l'habitacle). Si le véhicule est un véhicule automobile, son épaisseur est de préférence d'au plus 4 mm, et même d'au plus 3 mm ou 2,5 mm, - notamment 2,1 mm, 1,9 mm, 1,8 mm, 1,6 mm et 1,4 mm- et de préférence d'au moins 0,7 mm ou 1 mm ;
- un intercalaire de feuilletage (mono ou multifeuillet), éventuellement neutre, clair, extraclair ou teinté notamment gris ou vert, en matière polymère, de préférence thermoplastique et mieux encore en polyvinylbutyral (PVB). Si le véhicule est un véhicule routier, son épaisseur E3 est d'au plus 1,8 mm, mieux d'au plus 1,2 mm et même d'au plus 0,9 mm (et mieux d'au moins 0, 3mm et même d'au moins 0,6 mm). L'intercalaire de feuilletage est éventuellement acoustique et/ou ayant éventuellement une section transversale diminuant en forme du coin du haut vers le bas du vitrage feuilleté (en particulier un parebrise) notamment pour un affichage tête haute (HUD pour Head Up Display en anglais). L'intercalaire de feuilletage a une face principale FA orientée vers F2 et une face principale FB opposée à FA ;
- une deuxième feuille de verre ou plastique destinée à être le vitrage intérieur, de préférence bombée et en particulier teintée, avec une troisième face principale F3 côté F2 et une quatrième face principale F4 interne (orientée vers l'habitacle). Si le véhicule est un véhicule routier, son épaisseur E2 est de préférence inférieure à celle de la première feuille, même d'au plus 3 mm ou 2 mm - notamment 1,9 mm, 1,8 mm, 1,6 mm et 1,4 mm- ou même d'au plus 1,3 mm, et de préférence d'au moins 0,7 mm, l'épaisseur des première et deuxième feuilles étant de préférence strictement inférieure à 5 ou 4 mm, même à 3,7 mm.

Par exemple, la première feuille présente une teneur pondérale en oxyde de fer total d'au plus 0,05%.

Notamment la deuxième feuille est susceptible d'absorber (significativement) dans le proche infrarouge par exemple la deuxième feuille est en verre et présente une teneur pondérale en oxyde de fer total d'au moins 0,4%.

Aussi, la deuxième feuille présente un trou traversant dans l'épaisseur notamment de largeur W1 au moins centimétrique et de préférence d'au plus 25 cm ou mieux d'au plus 15 cm, encore mieux d'au plus 5 cm pour une meilleure tenue mécanique, notamment de section trapézoïdale ou rectangulaire, ou circulaire.

Eventuellement, l'intercalaire de feuilletage (incolore, etc.) présente un trou partiel ou traversant dans l'épaisseur, de préférence au moins prolongeant le trou traversant de la deuxième feuille, éventuellement plus large notamment d'au plus 10 mm ou plus étroit d'au plus 3 mm ou 1 mm, notamment de section trapézoïdale, ou rectangulaire ou circulaire etc (notamment de même forme et même homothétique à la section du trou traversant du verre).

La forme et les dimensions du trou traversant sont configurées selon les techniques de l'art de manière à transmettre et collecter efficacement et sélectivement l'ensemble des rayonnements traversant le vitrage.

Par exemple le trou est de même forme que le LIDAR.

Le trou (ouvert ou fermé) peut être notamment de section droite convexe en particulier trapézoïdale de préférence, ou encore circulaire ou ovale ou ellipsoïdale ou encore rectangulaire, carrée.

Le trou a notamment une dimension définie par le champ de vision du LIDAR en fonction de son positionnement.

Le trou traversant de la deuxième feuille peut être libre ou occupé tout ou partie par exemple par une matière de remplissage transparente à la longueur d'onde de travail, et/ou occupé par une insertion d'une partie du LIDAR.

Le trou traversant peut être :

- fermé (entouré par la paroi de la deuxième feuille), donc au sein du vitrage notamment espacé de la tranche du vitrage la plus proche d'au moins 3 cm ou 5 cm ;
- ouvert ou débouchant, formant une encoche (périphérique).

Le vitrage peut comporter un trou traversant total composé :

- d'un trou traversant dans l'intercalaire de feuilletage (mono ou multi feuillets) de largeur D1 ;
- et dudit trou traversant dans la deuxième feuille de largeur W1.

Les premier et deuxième trous sont d'axe de symétrie confondu ou proche et de préférence de largeur identique (avant et/ou après feuilletage).

Le trou traversant est destiné à être positionné dans le trajet optique du LIDAR.

La transmission lumineuse $T_L$ du vitrage feuilleté dans une zone sans trou (zone centrale notamment si pare-brise) est de préférence d'au moins 70% ou 75%, 80% ou 85%, 88%.

Le trou traversant de section constante ou variable, notamment trapézoïdale ou rectangulaire ou en disque ou ovale, est par exemple de plus petite dimension (diamètre) d'au moins 2 cm, 3 cm, 5 cm et de préférence de plus grande dimension d'au plus 30 cm ou 25 cm.

Le vitrage comporte de préférence une couche de masquage opaque périphérique notamment une bande, opaque de masquage périphérique, notamment noire.

La couche de masquage opaque est notamment sous forme d'au moins un revêtement sur l'une des première et deuxième feuilles et/ou sur l'intercalaire de feuilletage.

La zone est par exemple une bande rectangulaire le long d'un bord du vitrage, notamment bord longitudinal en particulier d'un pare-brise. La bande est notamment un bandeau sous tout le long du bord et élargie dans la zone (notamment centrale) avec ledit trou traversant

La couche de masquage peut être de part et d'autre du trou (fermé) et même entourer le trou (fermé).

Par ailleurs, le vitrage peut comporter une platine (opaque) collée en face F4 comportant un trou notamment au droit dudit trou traversant du vitrage interne (plus large ou dans le prolongement dudit trou traversant) si le vitrage interne est troué, notamment platine plastique éventuellement renforcée, opaque, avec des moyens aptes à supporter ou maintenir un système de vision infrarouge à ladite longueur d'onde de travail tel qu'un LIDAR.

En particulier, sur la face F4 peut être collée une platine notamment d'épaisseur subcentimétrique en particulier 1 à 3 mm, et même 1,5 à 2,5 mm. Elle est par exemple en plastique éventuellement renforcé (fibres etc) par exemple polycarbonate (PC), polyméthacrylate de méthyle (PMMA), polyéthylène (PE), polypropylène (PP), polyamide (PA66), acrylonitrile butadiène styrène (ABS), et leurs alliages ABS-PC, polystyréne (PS), acrylonitrile styrène acrylate ASA, à base de polymère de formaldéhyde (polyoxymethylene POM), de terphényle polybromé (PBT), de préférence chargé en fibres de verre pour encore plus de résistance, notamment le PA66 GF30 (30% de fibres de verre).

Cette platine peut servir pour porter ou contribuer à maintenir ou stabiliser le LIDAR. Cette platine peut être trouée au droit dudit trou traversant.

Cette platine (trouée ou non) peut être utilisée aussi dans une vitrage (feuilleté) non troué.

Comme ledit trou traversant, cette platine est de préférence périphérique notamment en bordure supérieure du vitrage. Par exemple, elle est en zone centrale, zone (classique) du rétroviseur (présent ou absent).

Si le trou est fermé, le bord du trou le plus proche de la tranche du vitrage (bord longitudinal supérieure de préférence et notamment dans une zone centrale) est distant de cette tranche du vitrage (de la deuxième feuille) d'au moins 2 cm ou 3 cm et mieux 5 cm.

Le trou traversant peut être dans la zone centrale du bord longitudinal supérieur du pare-brise, zone usuelle du rétroviseur intérieur (adjacent au trou ou rétroviseur supprimé suivant les véhicules), zone où la couche de masquage en face F2 et/ou FA est généralement plus épaisse que sur les zones latérales longeant le bord supérieur (passager, conducteur).

De préférence, le trou traversant présente une section, notamment trapézoïdale ou de type circulaire ou ovale :

- de plus petite dimension d'au moins 2, 3, 5, 8 cm (adapté à la taille du système de vision infrarouge par exemple) - et de préférence de plus grande dimension (en particulier grand côté ou diamètre) d'au plus 40 cm, 30 cm, 20 cm (pour des aspects mécaniques) ;

- et de préférence un revêtement antireflet occupe une surface englobant le trou et de longueur d'au plus 30 cm.

En particulier, la section du trou traversant est un quadrilatère, notamment rectangle ou un trapèze, avec

- un premier (grand) côté ou bord longitudinal dit supérieur (le plus proche de la tranche du bord longitudinal supérieur du vitrage) de préférence parallèle à la tranche du bord longitudinal supérieur du vitrage et de longueur de préférence d'au plus 30 cm, 20 cm ou 15 cm ou 12 cm et notamment espacé d'au moins 5 cm ou 6 cm de la tranche ;
- un deuxième (grand) côté ou bord longitudinal dit inférieur (le plus éloigné de la tranche du bord longitudinal supérieur du vitrage, plus proche de la zone centrale) de préférence parallèle à la tranche du bord longitudinal supérieur du vitrage et de longueur de préférence d'au plus 35 cm ou 30 cm ou 25 cm ou 20 cm et de préférence plus grande que celle du premier grand côté ;
- de hauteur (entre ces grands côtés) de préférence d'au moins 5 cm et même d'au plus 15 cm.

Si le trou est petit d'au plus 10, 8, 5, 2 cm, on préfère faire un trou circulaire.

Le trou traversant est le long d'un bord longitudinal ou alternativement le trou traversant est le long d'un bord latéral.

Dans le cas d'une lunette arrière, le trou traversant peut être périphérique le long d'un bord longitudinal (notamment supérieur) ou latéral.

Le trou traversant présente une forme donnée notamment de section droite convexe, par exemple trapézoïdale ou rectangulaire ou ronde ou ovale. Le revêtement antireflet peut présenter une forme homothétique

L'intercalaire peut bien entendu comprendre plusieurs feuillets en matière thermoplastique de natures différentes, par exemple de duretés différentes pour assurer une fonction acoustique, comme par exemple décrit dans la publication US 6,132,882, notamment une ensemble de feuillets de PVB de duretés différentes. De même, l'une des feuilles de verres peut être amincie par rapport aux épaisseurs classiquement utilisées.

L'intercalaire peut selon l'invention présenter une forme en coin, notamment en vue d'une application HUD (Head Up Display pour visualisation tête haute). L'un des feuillets de l'intercalaire peut également être teinté dans la masse.

Comme intercalaire de feuilletage usuel, outre le PVB, on peut citer le polyuréthane PU utilisé souple, un thermoplastique sans plastifiant tel que le copolymère éthylène/acétate de vinyle (EVA), une résine ionomère. Ces plastiques ont par exemple une épaisseur entre 0,2 mm et 1,1 mm, notamment 0,3 et 0,7 mm.

L'intercalaire de feuilletage peut comprendre un autre film plastique fonctionnel (transparent, clair ou teinté) par exemple un film en poly(éthylène téréphtalate) PET porteur d'une couche athermique, électroconductrice etc par exemple on a PVB/ film fonctionnel/PVB entre les faces F2 et F3.

L'une des première et deuxième feuilles au moins (de préférence le verre extérieur) peut être teintée, et le vitrage feuilleté peut comporter également une couche réfléchissant ou absorbant le rayonnement solaire, de préférence en face F4 ou en face F2 ou F3, en particulier une couche d'oxyde transparent électro-conducteur dite couche TCO (en face F4) ou même un empilement de couches minces comprenant au moins une couche TCO, ou d'empilements de couches minces comprenant au moins une couche d'argent (en F2 ou F3), la ou chaque couche d'argent étant disposée entre des couches diélectriques.

On peut cumuler couche (à l'argent) en face F2 et/ou F3 et couche TCO en face F4.

La couche TCO (d'un oxyde transparent électro-conducteur) est de préférence une couche d'oxyde d'étain dopé au fluor ($SnO_2$:F) ou une couche d'oxyde mixte d'étain et d'indium (ITO).

La couche réfléchissant ou absorbant le rayonnement solaire est de préférence absente dans la zone pour le LIDAR, donc absente en regard dudit trou traversant dans le cas d'un vitrage avec trou.

Le vitrage peut donc comporter sur la face F2 un revêtement fonctionnel qui est une couche fonctionnelle athermique, notamment électroconductrice, éventuellement chauffante, en particulier un empilement à l'argent, si nécessaire absente dans la zone pour le LIDAR notamment dudit trou traversant au moins dans la zone centrale et en bordure du trou traversant entre la face F2 et Fa.

L'intercalaire (ou tout autre film polymère) peut comporter des fils métalliques notamment chauffants (face FB, face FA etc.) notamment ancrés sur la surface et présents ou si nécessaire absents dans la zone pour le LIDAR en particulier en regard dudit trou traversant de la deuxième feuille de verre (si trouée).

Les fils chauffants notamment ont une épaisseur inférieure ou égale à 0,1 mm de préférence de cuivre, de tungstène, d'or, d'argent ou aluminium ou d'alliages d'au moins deux de ces métaux.

Dans un mode de réalisation, une zone de chauffage du vitrage (éventuellement locale, en regard dudit trou traversant de la deuxième feuille de verre) comporte une pluralité de fils métalliques individuels, appelés « fils métalliques chauffants » qui relient des « busbars » entre eux. Le courant de chauffage passe par ces fils métalliques individuels. Les fils sont avantageusement très minces de manière à ne pas, ou seulement très peu, détériorer la transparence du vitrage.

De préférence, les fils métalliques ont une épaisseur inférieure ou égale à 0,1 mm, en particulier comprise entre 0,02 et 0,04 mm, et idéalement entre 0,024 mm et 0,029 mm. Les fils métalliques contiennent de préférence du cuivre, du tungstène, de l'or, de l'argent ou de l'aluminium ou un alliage d'au moins deux de ces métaux. L'alliage peut également contenir du molybdène, du rhénium, de l'osmium, de l'iridium, du palladium ou du platine. Les fils métalliques sont de préférence isolés électriquement.

Pour le verre de la première feuille de verre et/ou de la deuxième feuille de verre, il s'agit de préférence d'un verre du type silico-sodo-calcique.

La première feuille de verre (verre externe) notamment à base de silice, sodocalcique, silicosodo calcique (de préférence), ou aluminosilicate, ou borosilicate, présente une teneur pondérale en oxyde de fer total (exprimé sous la forme $Fe_2O_3$) d'au plus 0,05% (500ppm), de préférence d'au plus 0,03% (300ppm) et d'au plus 0,015% (150ppm) et notamment supérieure ou égale à 0,005%.

La deuxième feuille de verre (verre interne notamment troué) notamment à base de silice, sodocalcique, de préférence silicosodo calcique (et comme la première feuille de verre), voire aluminosilicate, ou borosilicate présente une teneur pondérale en oxyde de fer total (exprimé sous la forme $Fe_2O_3$) d'au moins 0,4% et de préférence d'au plus 1,5%.

Dans une configuration, la première feuille est en verre minéral et la deuxième feuille est en plastique par exemple plus mince (film) etc, par exemple en PC, PMMA, PET.

La deuxième feuille de verre ou plastique est notamment verte, bleue, grise. La deuxième feuille de verre peut être verte par le $Fe_2O_3$ ou encore bleue avec CoO et Se ou grise avec Se et CoO.

On peut citer notamment les verres de la demanderesse dénommés TSAnx (0,5 à 0,6% de fer) TSA2+,TSA3+(0,8 à 0,9% de fer),TSA4+(1% de fer),TSA5+, par exemple verts.

Le TSA3+ (2.1mm) a par exemple une transmission totale à 905 mm d'environ 40% et à 1550mm d'environ 50%

La deuxième feuille de verre notamment trouée peut présenter un rédox étant défini comme étant le rapport entre la teneur pondérale en FeO (fer ferreux) et la teneur pondérale en oxyde de fer total (exprimé sous la forme $Fe_2O_3$) entre 0,22 et 0,35 ou 0,30.

Ladite deuxième feuille de verre notamment trouée peut avoir une composition chimique qui comprend les constituants suivants en une teneur variant dans les limites pondérales ci-après définies :

| | |
|---|---|
| - $SiO_2$ | 64 - 75 % |
| - $Al_2O_3$ | 0 - 5 % |
| - $B_2O_3$ | 0 - 5 %, |
| - CaO | 2 - 15 % |
| - MgO | 0 - 5 % |
| - $Na_2O$ | 9 - 18 % |
| - $K_2O$ | 0 - 5 % |
| - $SO_3$ | 0,1 - 0,35% |
| - $Fe_2O_3$ | (fer total) au moins 0,4% et même 0,4 à 1,5%, |
| - Eventuellement Rédox | 0,22 - 0,3% |
| - Et notamment moins d e 0,1% d'impuretés. | |

Le verre intérieur et/ou extérieur peut avoir subi un traitement chimique ou thermique du type durcissement, recuit ou une trempe (pour une meilleure résistance mécanique notamment) ou être semi trempé.

Le verre de la première feuille de verre et/ou de la deuxième feuille de verre est de préférence du type flotté, c'est-à-dire susceptible d'avoir été obtenu par un procédé consistant à déverser le verre fondu sur un bain d'étain en fusion (bain « float »). On entend par faces « atmosphère » et « étain », les faces ayant été respectivement en contact avec l'atmosphère régnant dans le bain float et en contact avec l'étain fondu. La face étain contient une faible quantité superficielle d'étain ayant diffusé dans la structure du verre.

La face F2 peut aussi bien être la face « étain » la face « atmosphère ».

La première feuille de verre peut être par exemple un verre silico-sodo-calcique comme le verre Diamant[®] de Saint-Gobain Glass, ou Optiwhite[®] de Pilkington, ou B270[®] de Schott, ou Sunmax[®] d'AGC ou d'autre composition décrite dans le document WO04/025334. On peut aussi choisir le verre Planiclear[®] de la société Saint-Gobain Glass

Avec les matières premières naturelles ordinaires, la teneur pondérale totale en oxyde de fer est de l'ordre de 0,1% (1000 ppm).

La teneur en $Fe_2O_3$ (fer total) de la première feuille de verre est de préférence inférieure à 0,015%, voire inférieure ou égale à 0,012%, notamment 0,010%, afin d'augmenter la transmission proche infrarouge du verre. La teneur en $Fe_2O_3$ est de préférence supérieure ou égale à 0,005%, notamment 0,008% pour ne pas trop pénaliser le coût du verre.

Pour augmenter plus encore la transmission de la première feuille de verre dans l'infrarouge, on peut diminuer la teneur en fer ferreux au profit de la teneur en fer ferrique, donc d'oxyder le fer présent dans le verre. On vise ainsi des verres ayant un « rédox » le plus faible possible, idéalement nul ou quasi nul. Ce nombre peut varier entre 0 et 0,9, des rédox nuls correspondant à un verre totalement oxydé.

Les verres comprenant de faibles quantités d'oxyde de fer, notamment moins de 200 ppm, voire moins de 150 ppm, ont une tendance naturelle à présenter des rédox élevés, supérieurs à 0,4, voire même à 0,5. Cette tendance est probablement due à un déplacement de l'équilibre d'oxydoréduction du fer en fonction de la teneur en oxyde de fer.

Le rédox de la première feuille de verre est de préférence supérieur ou égal à 0,15, et notamment compris entre 0,2 et 0,30, notamment entre 0,25 et 0,30. De trop faibles rédox contribuent en effet à la réduction de la durée de vie des fours.

Dans les première et même deuxième feuille, la silice $SiO_2$ est généralement maintenue dans des limites étroites pour les raisons suivantes. Au-dessus de 75 %, la viscosité du verre et son aptitude à la dévitrification augmentent fortement ce qui rend plus difficile sa fusion et sa coulée sur le bain d'étain fondu. Au-dessous de 60 %, notamment 64%, la résistance hydrolytique du verre décroît rapidement. La teneur préférée est comprise entre 65 et 75%, notamment entre 71 et 73%.

Ladite première feuille de verre peut avoir une composition chimique qui comprend les constituants suivants en une teneur variant dans les limites pondérales ci-après définies :

| | |
|---|---|
| - $SiO_2$ | 60 - 75 % |
| - $Al_2O_3$ | 0 - 10 % |
| - $B_2O_3$ | 0 - 5 %, de préférence 0 |
| - CaO | 5 - 15 % |
| - MgO | 0 - 10 % |
| - $Na_2O$ | 5 - 20 % |
| - $K_2O$ | 0 - 10 % |
| - BaO | 0 - 5 %, de préférence 0, |
| - $SO_3$ | 0,1 - 0,4% |
| - $Fe_2O_3$ | (fer total) 0 à 0,015%, |
| - Rédox | 0,1 - 0,3. |

Dans l'ensemble du texte, les pourcentages sont des pourcentages pondéraux.

Les feuilles de verre sont de préférence formées par flottage sur un bain d'étain. D'autres types de procédé de formage peuvent être employés, tels que les procédés d'étirage, procédé « down-draw », procédé de laminage, procédé Fourcault.

La composition de verre de la première feuille de verre peut comprendre, outre les impuretés inévitables contenues notamment dans les matières premières, une faible proportion (jusqu'à 1 %) d'autres constituants, par exemple des agents aidant à la fusion ou l'affinage du verre (Cl...), ou encore des éléments provenant de la dissolution des réfractaires servant à la construction des fours (par exemple $ZrO_2$). Pour les raisons déjà évoquées, la composition selon l'invention ne comprend de préférence pas d'oxydes tels que $Sb_2O_3$, $As_2O_3$ ou $CeO_2$.

La composition de la première feuille de verre ne comprend de préférence aucun agent absorbant les infrarouges (notamment pour une longueur d'ondes comprise entre 800 et 1800 nm). En particulier, la composition selon l'invention ne contient de préférence aucun des agents suivants : les oxydes d'éléments de transition tels que CoO, CuO, $Cr_2O_3$, NiO, $MnO_2$, $V_2O_5$, les oxydes de terres rares tels que $CeO_2$, $La_2O_3$, $Nd_2O_3$, $Er_2O_3$, ou encore les agents colorants à l'état élémentaire tels que Se, Ag, Cu. Parmi les autres agents de préférence exclus figurent également les oxydes des éléments suivants : Sc, Y, Pr, Sm, Eu, Gd, Tb, Dy, Ho, Tm, Yb, Lu. Ces agents ont bien souvent un effet colorant indésirable très puissant, se manifestant à de très faibles teneurs, parfois de l'ordre de quelques ppm ou moins (1 ppm = 0,0001%). Leur présence diminue ainsi très fortement la transmission du verre.

De préférence, la première feuille de verre présente une composition chimique qui comprend les constituants suivants en une teneur variant dans les limites pondérales ci-après définies :

| | |
|---|---|
| - $SiO_2$ | 60 - 75 % |
| - $Al_2O_3$ | 0 - 10 % |
| - $B_2O_3$ | 0 - 5 %, de préférence 0 |
| - CaO | 5 - 15 % |
| - MgO | 0 - 10 % |
| - $Na_2O$ | 5 - 20 % |

(suite)

| | |
|---|---|
| - K$_2$O | 0 - 10 % |
| - BaO | 0 - 5 %, de préférence 0, |
| - SO$_3$ | > 0,2 - 0,4% |
| - Fe$_2$O$_3$ | (fer total) 0 à 0,015%, |
| - Rédox | 0,2 - 0,30. |

La première feuille de verre peut présenter une composition chimique qui comprend les constituants suivants en une teneur variant dans les limites pondérales ci-après définies :

| | |
|---|---|
| - SiO$_2$ | 60 - 75 % |
| - Al$_2$O$_3$ | 0 - 10 % |
| - B$_2$O$_3$ | 0 - 5 %, de préférence 0 |
| - CaO | 5 - 15 % |
| - MgO | 0 - 10 % |
| - Na$_2$O | 5 - 20 % |
| - K$_2$O | 0 - 10 % |
| - BaO | 0 - 5 %, de préférence 0, |
| - SO$_3$ | 0,1 - 0,4% |
| - Fe$_2$O$_3$ | (fer total) 0 à 0,02%, |
| - Rédox | 0,15 - 0,3. |

Dans la présente invention, la teneur en Fe$_2$O$_3$ (fer total) est de préférence inférieure à 0,015%, voire inférieure ou égale à 0,012%, notamment 0,010%, ce afin d'augmenter la transmission proche infrarouge du verre. La teneur en Fe$_2$O$_3$ est de préférence supérieure ou égale à 0,005%, notamment 0,008% pour ne pas trop pénaliser le coût du verre.

Le rédox est de préférence supérieur ou égal à 0,15, et notamment compris entre 0,2 et 0,30, notamment entre 0,25 et 0,30. De trop faibles rédox contribuent en effet à la réduction de la durée de vie des fours.

Dans les première et deuxième feuille, la silice SiO$_2$ est généralement maintenue dans des limites étroites pour les raisons suivantes. Au-dessus de 75 %, la viscosité du verre et son aptitude à la dévitrification augmentent fortement ce qui rend plus difficile sa fusion et sa coulée sur le bain d'étain fondu. Au-dessous de 60 %, notamment 64%, la résistance hydrolytique du verre décroît rapidement. La teneur préférée est comprise entre 65 et 75%, notamment entre 71 et 73%.

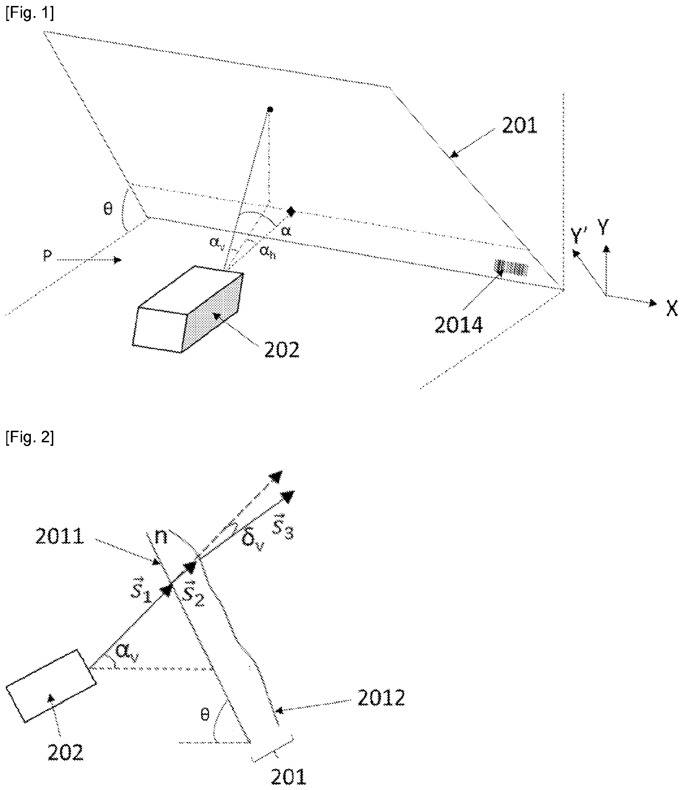

[Fig. 2] La figure 2 montre une représentation schématique d'une vue de coupe du vitrage 201.

Le vitrage 201 comporte une surface libre interne 2011 et une surface libre externe 2012 séparées d'une épaisseur pouvant varier localement, la surface libre interne 2011 étant située vers l'intérieur du véhicule et la surface libre externe 2012 vers l'extérieur du véhicule. Une onde lumineuse émise par le LIDAR traverse donc d'abord la surface libre interne 2011 puis la surface libre externe 2012 du vitrage 201. Pour une onde lumineuse donnée, le point de la surface libre interne 2011 traversé par l'onde lumineuse est appelé point d'impact.

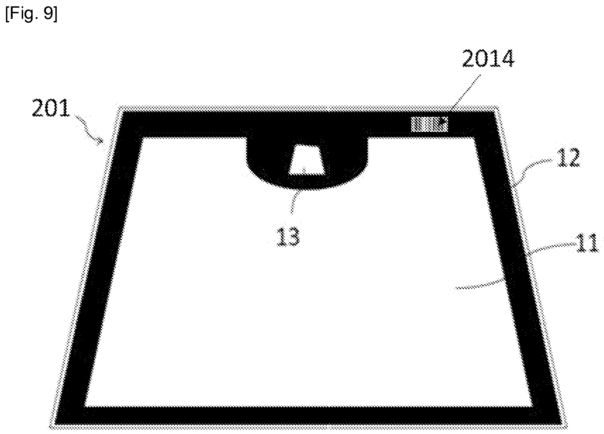

[Fig. 9] La figure 9 montre une représentation schématique d'un exemple de vitrage 201 en vue de face. Sur la figure 9, le vitrage 201 est un pare-brise de véhicule routier.

En référence à la figure 9, le pare-brise 201 comprend une feuille 11 de verre 11 et un élément opaque 12. L'élément opaque 12 permet notamment de cacher depuis l'extérieur du véhicule des éléments disposés à l'intérieur dudit véhicule, par exemple une partie du dispositif LIDAR. L'élément opaque 12 recouvre au moins une des faces principales de la feuille 11 de verre de manière à border tout le pare-brise 10. L'élément opaque 12 peut être disposé sur la surface d'une seule des deux faces principales de la feuille 11 de verre ou peut comprendre plusieurs portions, chacune des portions étant disposée sur l'une et sur l'autre des faces principales de la feuille 11 de verre. Dans le cas d'un vitrage multiple comprenant plusieurs feuilles de verre, comme un vitrage feuilleté tel que décrit précédemment, l'élément opaque 12 peut aussi être formé de plusieurs portions, chaque portion étant disposée sur la surface de deux ou plusieurs feuilles de verre selon le nombre de portions. Par ailleurs, la feuille 11 de verre peut être inclinée par exemple d'un angle de 30°. De plus, la feuille 11 de verre peut être bombée suivant un ou deux axes, le rayon de courbure est par exemple compris entre 6 m et 30 m.

De préférence, l'élément opaque 12 est une couche d'émail déposée à la surface de la feuille 11. Naturellement, la couche d'émail peut être remplacée par tout autre élément opaque qui permet de cacher depuis l'extérieur certains éléments disposés à l'intérieur du véhicule routier.

Par ailleurs, comme on peut le voir sur la figure 1, l'élément opaque 12 délimite une zone donnée 13 de la feuille 11 de verre située au niveau de la bordure supérieure du pare-brise 10, par exemple une zone centrale périphérique. La zone donnée 13, appelée zone LIDAR 13 est destinée à être placée sur le trajet des ondes du dispositif LIDAR. De préférence, la surface de la zone donnée 13 est inférieure à 0,5 m².

Le vitrage 201 présentant des défauts de planéité, la trajectoire des ondes lumineuses émises par le LIDAR traversant la zone LIDAR 13 du vitrage 201 est déviée. Les corrections angulaires déterminées via le procédé selon le premier aspect de l'invention sont destinées à être utilisées par le LIDAR pour prendre en compte la déviation que le vitrage 201 induit aux ondes lumineuses émises par le LIDAR, afin d'évaluer correctement la position des objets.

[Fig. 1] La figure 1 montre une représentation schématique d'un LIDAR 202 émettant une onde lumineuse traversant un vitrage 201 de véhicule.

Le vitrage 201 est incliné d'un angle $\theta$ par rapport à un plan horizontal P comportant un axe horizontal X et perpendiculaire à un axe vertical Y. L'angle $\theta$ est par exemple compris entre 0° et 90° et préférentiellement entre 21° et 36° et en moyenne de 30° quand le vitrage 201 est un pare-brise.

Le vitrage 201 et en particulier la surface libre interne 2011, définit un plan de surface comportant l'axe horizontal X et un axe normal Y' perpendiculaire à l'axe horizontal X. L'axe vertical Y n'est pas compris dans le plan de surface.

Sur la figure 1, le LIDAR 202 émet une onde lumineuse en direction du vitrage 201 selon un angle d'émission $\alpha$. Le losange représenté sur le vitrage 201 correspond au point du vitrage 201 qui serait traversé par une onde lumineuse émise par le LIDAR 202 selon un angle d'émission $\alpha$ nul.

L'angle d'émission $\alpha$ comporte une composante horizontale $\alpha_h$ selon l'axe horizontal X et une composante verticale $\alpha_v$ selon l'axe vertical Y.

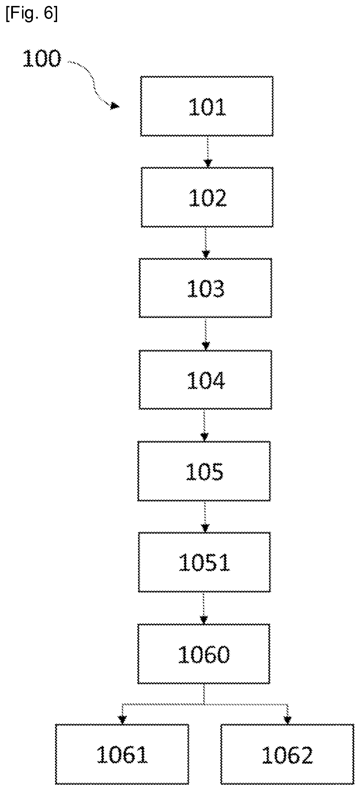

[Fig. 6] La figure 6 est un schéma synoptique illustrant l'enchaînement des étapes du procédé 100 selon le premier aspect de l'invention.

La première étape 101 du procédé 100 consiste, pour chaque point d'un ensemble de points du vitrage 201, à déterminer une épaisseur locale du vitrage 201 au dit point.

On entend par « épaisseur locale du vitrage en un point », l'épaisseur entre la surface libre interne 2011 et la surface libre externe 2012 au dit point.

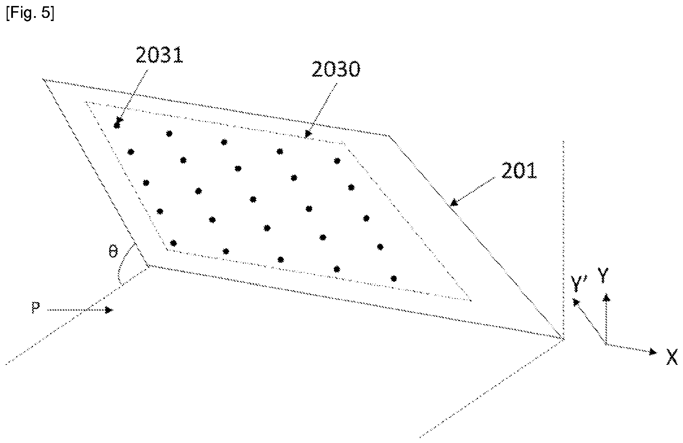

[Fig. 5] La figure 5 montre une représentation schématique du vitrage 201 sur lequel sont représentés les points 2031 de l'ensemble de points 2031.

Sur la figure 5, chaque point 2031 de l'ensemble de points 2031 est représenté par un cercle noir.

L'ensemble de points 2031 est par exemple choisi de manière à couvrir une zone 2030 particulière du vitrage 201.

La zone 2030 est par exemple rectangulaire, avec une dimension selon l'axe horizontal X d'au moins 1 cm et une dimension selon l'axe normal Y' d'au moins 1 cm.

L'ensemble de points 2031 est par exemple choisi de manière que deux points 2031 de l'ensemble de points 2031 voisins soient espacés d'au moins 100 μm selon l'axe horizontal X et/ou d'au moins 10 nm selon l'axe normal Y'.

L'ensemble de points 2031 peut également être choisi en fonction du type de défauts couramment rencontrés dans le vitrage 201.

La première étape 101 est réalisée par une mesure directe d'épaisseur au dit point 2031, ou par différenciation d'une première mesure de surface réalisée sur la surface libre interne 2011 du vitrage 201 au dit point 2031 et d'une seconde mesure de surface réalisée sur la surface libre externe 2012 du vitrage 201 au dit point 2031.

La première étape 101 est par exemple réalisée par mesure de front d'onde. Pour cela est utilisé un émetteur d'ondes lumineuses comprenant un analyseur de front d'onde, également appelé aberromètre, qui permet de mesurer la forme du front d'ondes d'une onde lumineuse émise par l'émetteur et de déterminer la déformation subie par le front d'ondes lors de son passage à travers le vitrage 201. On rappelle qu'un front d'ondes est la surface d'onde en trois dimensions définie de façon que chaque onde lumineuse provenant de la même source lumineuse soit orthogonale au front d'onde.

Ainsi, la différence de phase entre le front d'onde transmis, c'est-à-dire le front d'onde de l'onde lumineuse ayant traversé le vitrage 201 et le front d'onde de l'onde lumineuse émise est calculée pour déterminer une erreur de front d'ondes traduisant la déviation du front d'onde transmis et permettant d'obtenir l'épaisseur locale au point du vitrage 201 traversé par l'onde lumineuse.

La première étape 101 peut être réalisée par d'autres méthodes de mesure optique sans contact, par exemple par déflectométrie ou encore par profilométrie confocale. La première étape 101 peut également être réalisée par mesure de distorsion optique en transmission.

La deuxième étape 102 du procédé 100, illustrée sur la figure 2, consiste à calculer une pente locale horizontale $\varepsilon_h$ correspondant à la composante selon l'axe horizontal X de la différence $\varepsilon$ entre l'épaisseur locale et l'épaisseur e que devrait présenter le vitrage 201 et une pente locale verticale $\varepsilon_v$ correspondant à la composante selon l'axe normal Y' de la différence entre l'épaisseur locale et l'épaisseur e que devrait présenter le vitrage 201 au dit point 2031.

La deuxième étape 102 est réalisée par traitement numérique.

La troisième étape 103 du procédé 100 consiste à calculer un décalage angulaire vertical $\delta_v$ en fonction de la composante verticale $\alpha_v$ de l'angle d'émission $\alpha$ de l'onde lumineuse destinée à traverser le vitrage 201 au dit point 2031,

de la pente locale verticale $\varepsilon_v$ au dit point 2031 et de l'inclinaison $\theta$ du vitrage 201.

La quatrième étape 104 du procédé 100 consiste à calculer un décalage angulaire horizontal $\delta_h$ en fonction de la composante horizontale $\alpha_h$ de l'angle d'émission $\alpha$ de l'onde lumineuse destinée à traverser le vitrage 201 au dit point 2031, de la pente locale horizontale $\varepsilon_h$ au dit point 2031 et de l'inclinaison $\theta$ du vitrage 201.

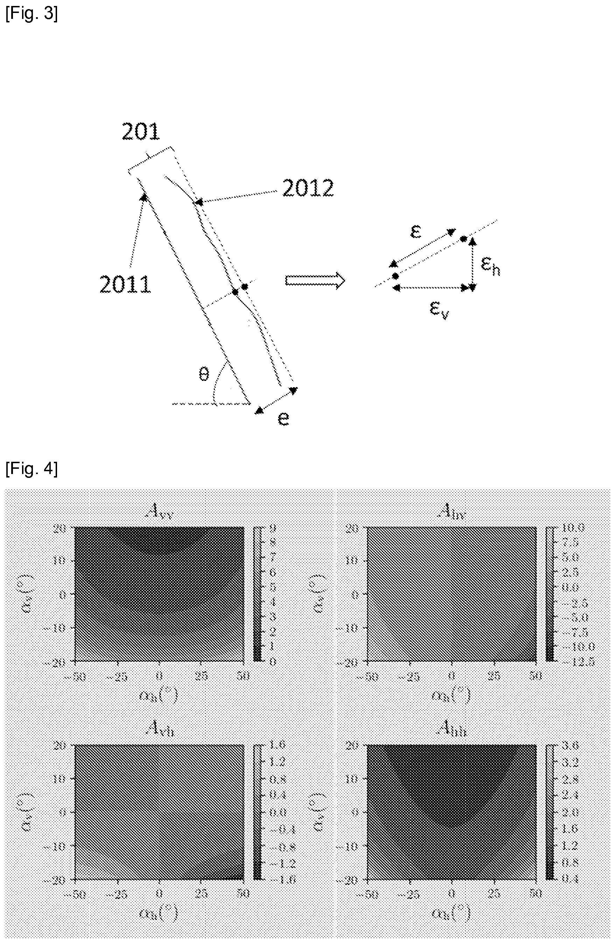

[Fig. 3] La figure 3 montre une représentation schématique du trajet d'une onde lumineuse émise par un LIDAR 202 à travers le vitrage 201 dans un plan perpendiculaire au plan de surface. Le plan de surface comportant l'axe horizontal X, seules les composantes verticales sont visibles sur la figure 3.

Sur la figure 3, le vitrage 201 présente un indice de réfraction n. $\vec{s_1}$ correspond à la direction de l'onde lumineuse avant son passage à travers le vitrage 201, c'est-à-dire selon l'angle d'émission $\alpha$, $\vec{s_2}$ à la direction de l'onde lumineuse après son passage à travers la surface libre interne 2011 du vitrage 201 et $\vec{s_3}$ à la direction de l'onde lumineuse après son passage à travers la surface libre interne 2011 puis la surface libre externe 2012 du vitrage 201.

Après son passage à travers le vitrage 201, l'onde lumineuse a été déviée de l'angle $\delta_v$ selon l'axe vertical Y comme représenté sur la figure 3 et d'un angle $\delta_h$ selon l'axe horizontal X non représenté sur les figures.

La troisième étape 103 et la quatrième étape 104 sont réalisées en appliquant l'équation de la réfraction d'une part, à la surface libre interne 2011 du vitrage 201 et d'autre part, à la surface libre externe 2012 du vitrage 201. On obtient :

$$\begin{cases} \vec{s_2} = -\dfrac{1}{n}\vec{N_1} \wedge \left(\vec{N_1} \wedge \vec{s_1}\right) - \sqrt{1 - \dfrac{1}{n^2}\left\|\vec{N_1} \wedge \vec{s_1}\right\|^2}\,\vec{N_1} \\[2em] \vec{s_3} = -n\vec{N_2} \wedge \left(\vec{N_2} \wedge \vec{s_2}\right) - \sqrt{1 - n^2\left\|\vec{N_2} \wedge \vec{s_2}\right\|^2}\,\vec{N_2} \end{cases} \quad (1)$$

Avec :

- $\vec{N_1}$, le vecteur normal à la surface libre interne 2011 du vitrage 201 au dit point 2031 ;
- $\vec{N_2}$, le vecteur normal à la surface libre externe 2012 du vitrage 201 au dit point 2031.

En approximant au premier ordre, l'équation de la réfraction appliquée à la surface libre interne 2011 du vitrage 201 et l'équation de la réfraction appliquée à la surface libre externe 2012 du vitrage 201 développées en (1), on obtient :

$$\begin{cases} \delta_v = A_{vv}\varepsilon_v + A_{hv}\varepsilon_h \\ \delta_h = A_{vh}\varepsilon_v + A_{hh}\varepsilon_h \end{cases}$$

Avec $A_{vv}$, $A_{hv}$, $A_{vh}$, $A_{hh}$, des coefficients dépendant de la composante verticale $\alpha_v$ de l'angle d'émission $\alpha$ et de la composante horizontale $\alpha_h$ de l'angle d'émission $\alpha$ de l'onde lumineuse destinée à traverser le vitrage 201 au dit point 2031 et de l'inclinaison $\theta$ du vitrage 201.

Les coefficients $A_{vv}$, $A_{hv}$, $A_{vh}$, $A_{hh}$ sont calculés par une méthode analytique, c'est-à-dire sans avoir à résoudre d'équations différentielles, à l'aide d'un outil de calcul matriciel tel que numpy ou matlab.

Par exemple, dans le cas d'un vitrage 201 non incliné, c'est-à-dire ayant un angle d'inclinaison de 0°, pour un angle d'émission $\alpha$ nul, on obtient :

$$\begin{cases} A_{vv} = A_{hh} = n - 1 \\ A_{vh} = A_{hv} = 0 \end{cases}$$

Par exemple, dans le cas d'un vitrage 201 incliné, c'est-à-dire ayant un angle d'inclinaison $\theta$, pour un angle d'émission $\alpha$ nul, on obtient :

$$\begin{cases} A_{vv} = \dfrac{\sqrt{n^2 - \sin^2\theta} - \cos\theta}{\cos\theta} \\[1.5em] A_{hh} = \sqrt{n^2 - \sin^2\theta} - \cos\theta \\[0.5em] A_{vh} = A_{hv} = 0 \end{cases}$$

[Fig. 4] La figure 4 donne la valeur de coefficients $A_{vv}$, $A_{hv}$, $A_{vh}$, $A_{hh}$ en fonction de la composante verticale $\alpha_v$ de

l'angle d'émission $\alpha$ et de la composante horizontale $\alpha_h$ de l'angle d'émission $\alpha$ pour un vitrage 201 incliné de 30° par rapport à l'axe horizontal X.

La cinquième étape 105 du procédé 100 consiste à établir une carte de corrections angulaires. La carte de corrections angulaires comporte, pour chaque point 2031 de l'ensemble de points 2031, le décalage angulaire vertical $\delta_v$ et le décalage angulaire horizontal $\delta_h$ calculés aux troisième étape 103 et quatrième étape 104 du procédé 100 pour ledit point 2031.

Le procédé 100 peut également comporter une étape 1051 supplémentaire consistant à compléter la carte de corrections angulaires en calculant le décalage angulaire vertical $\delta_v$ et le décalage angulaire horizontal $\delta_h$ de plusieurs points du vitrage 201 n'appartenant pas à l'ensemble de points 2031. Le calcul est par exemple réalisée en calculant pour chacun de ces points, une pente locale horizontale $\varepsilon_h$ et une pente locale verticale $\varepsilon_v$ par interpolation à partir des pentes locales horizontales ($\varepsilon_h$) et des pentes locales verticales ($\varepsilon_v$)calculés pour l'ensemble de points 2031, puis en calculant un décalage angulaire vertical $\delta_v$ et un décalage angulaire horizontal $\delta_h$ pour le point comme réalisé à la troisième étape 103 et à la quatrième étape 104 du procédé 100.

Cette étape 1051 est notamment pertinente quand l'ensemble de points 2031 ne coïncident pas avec l'ensemble des points d'impact du LIDAR 202 pour pouvoir corriger les estimations du LIDAR 202 à chaque point d'impact 2032.

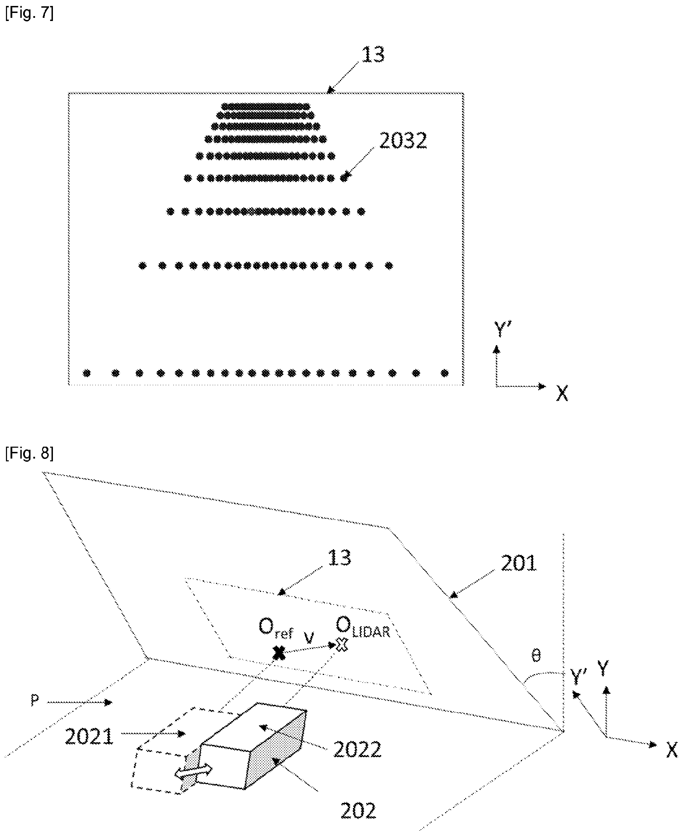

[Fig. 7] La figure 7 illustre un exemple d'ensemble de points d'impact 2032 du LIDAR 202. Si la carte de corrections angulaires a été établie pour l'ensemble de points 2031 représenté à la figure 5, les points d'impact 2032 ne coïncident pas avec l'ensemble de points 2031.

La relation entre la position d'un point sur le vitrage 201 et en particulier ses coordonnées (x ; y') respectivement selon l'axe horizontal X et l'axe normal Y', et l'angle d'émission $\alpha$ peut s'exprimer ainsi :

$$\begin{cases} x = \dfrac{\cos\theta \tan\alpha_h}{\sin\theta \tan\alpha_v + \cos\theta} \\ y' = \dfrac{\sin\alpha_v}{\cos(\theta - \alpha_v)} \end{cases}$$

Les première étape 101, deuxième étape 102, troisième étape 103, quatrième étape 104 et cinquième étape 105 et l'étape 1051 de complétion peuvent être réalisées avant l'installation du LIDAR 202. Dans ce cas, un point d'impact de référence théorique est défini. Le point d'impact de référence théorique est associé à un angle d'émission $\alpha$ de référence $\alpha_{ref}$. L'angle d'émission de référence $\alpha_{ref}$ est préférentiellement égale à 0.

Le procédé 100 comporte par exemple une étape 1060 de formation d'un point de mise en référence sur la surface libre interne 2011 sous forme d'un marquage correspondant au point d'impact de référence théorique défini.

[Fig. 8] La figure 8 montre une représentation schématique d'un vitrage 201 sur lequel est marqué par un croix noire le point de mise en référence $O_{ref}$.

Si, après l'installation du LIDAR 202, il existe un décalage entre le point de mise en référence $O_{ref}$ et un point d'impact de référence réel $O_{LIDAR}$ correspondant au point d'impact 2032 sur la surface libre interne 2011 d'une onde lumineuse émise à l'angle d'émission de référence $\alpha_{ref}$ par le LIDAR 202, le procédé 100 comporte, soit une étape 1061 de mise en coïncidence du point d'impact de référence réel $O_{LIDAR}$ et du point de mise en référence $O_{ref}$, soit une étape 1062 de recalage de la carte de corrections angulaires par application d'une translation v à chaque point de la carte de corrections angulaires.

Comme illustré sur la figure 8, la translation v a par exemple une valeur égale à l'écart entre la position du point de mise en référence $O_{ref}$ et la position du point d'impact de référence $O_{LIDAR}$ sur la surface libre interne 2011 du vitrage 201 représenté par une croix blanche.

L'étape 1061 de mise en coïncidence est par exemple réalisée via un mécanisme de fixation du LIDAR 202 sur le véhicule.

L'étape 1060 de formation du point de mise en référence peut être réalisée à n'importe quel moment avant l'étape 1061 de mise en coïncidence ou l'étape 1062 de recalage.

Un deuxième aspect de l'invention concerne un vitrage 201 de véhicule apte à laisser passer des ondes lumineuses émises par un LIDAR 202.

Le vitrage 201 comporte un moyen de stockage 2014 illustré sur la figure 1. Le moyen de stockage 2014 est configuré pour stocker la carte de corrections angulaires établie lors de la cinquième étape 105 via le procédé 100 selon le premier aspect de l'invention, éventuellement complétée lors de l'étape 1051 de complétion.

Le moyen de stockage 2014 peut également stoker d'autres informations relatives au vitrage 201, par exemple sa composition, sa date de fabrication ou encore son angle d'inclinaison $\theta$, ou des informations relatives au véhicule, par exemple le modèle du véhicule.

Le moyen de stockage 2014 se présente par exemple sous la forme d'une matrice de données, appelée également « datamatrix ». Le moyen de stockage 2014 peut également se présenter sous la forme d'un code-barre, par exemple un « flash code », un « TAGs », un « QR code » qui renvoie à une base de données. Naturellement, le moyen de stockage 2014 peut se présenter sous une autre forme, par exemple un disque dur, un serveur de stockage ou encore une mémoire électronique.

Les données stockées dans le moyen de stockage 2014 peuvent être cryptées en utilisant n'importe quel algorithme de cryptage approprié connu. Un lecteur spécifique pourra alors être utilisé pour déverrouiller le moyen de stockage 2014 et accéder au moins en partie aux données qu'il contient.

Le moyen de stockage 2014 peut être sur le vitrage 201 et en particulier imprimé sur le vitrage 201. L'impression est par exemple réalisée par gravure et/ou par impression par jet d'encre.

Le moyen de stockage 2014 est par exemple transparent ou visible sous certaines conditions, par exemple uniquement selon une certaine incidence, par souci de discrétion et se situe sur le clair de vitre comme illustré sur la figure 1.

Le moyen de stockage 2014 est par exemple dans une épargne réalisée dans la zone du vitrage 201 recouverte de l'élément opaque 12 comme illustré sur la figure 9.

Un troisième aspect de l'invention concerne un système associant un vitrage 201 selon le deuxième aspect de l'invention et un LIDAR 202 configuré pour émettre des ondes lumineuses traversant le vitrage 201.

Le vitrage 201 peut alors comporter un point de mise en référence $O_{ref}$ sous forme d'un marquage, par exemple sur sa surface libre interne 2011. Le marquage peut être permanent (dépôt, encore, émail, point sérigraphié etc.) ou provisoire, par exemple un autocollant) de manière à pouvoir être retiré après l'étape 1061 de mise en coïncidence.

Un quatrième aspect de l'invention concerne un véhicule comportant un vitrage 201 selon le deuxième aspect de l'invention ou un système selon le troisième aspect de l'invention.

## Revendications

1. Procédé (100) d'analyse d'un vitrage d'un véhicule pour une correction destinée à être utilisée pour un LIDAR (202) configuré pour émettre des ondes lumineuses, le vitrage (201) comportant une surface libre interne (2011) vers l'intérieur du véhicule et une surface libre externe (2012) vers l'extérieur du véhicule, chaque onde lumineuse étant destinée à traverser le vitrage (201) et étant définie par un point d'impact (2032) donné sur la surface libre interne, la surface libre interne définissant un plan de surface ayant une inclinaison ($\theta$) donnée par rapport à un plan horizontal (P) comportant un axe horizontal (X), l'axe horizontal (X) étant perpendiculaire à un axe vertical (Y) et à un axe normal (Y') compris dans le plan de surface, le procédé comportant les étapes suivantes :

   - pour chaque point (2031) d'un ensemble de points (2031) du vitrage (201) :

      ∘ détermination d'une épaisseur locale du vitrage (201) au dit point (2031, 101) ;
      ∘ obtention par traitement numérique, d'une pente locale horizontale ($\varepsilon_h$) et d'une pente locale verticale ($\varepsilon_v$) au dit point (2031), à partir de l'épaisseur locale au dit point (2031, 102) ;
      ∘ calcul d'un décalage angulaire vertical ($\delta_v$) en fonction d'une composante verticale ($\alpha_v$) d'un angle d'émission ($\alpha$) de l'onde lumineuse destinée à traverser le vitrage (201) au dit point (2031), de la pente locale verticale ($\varepsilon_v$) au dit point (2031) et de l'inclinaison ($\theta$) du vitrage (201, 103) ;
      ∘ calcul d'un décalage angulaire horizontal ($\delta_h$) en fonction d'une composante horizontale ($\alpha_h$) de l'angle d'émission ($\alpha$) de l'onde lumineuse destinée à traverser le vitrage (201) au dit point (2031), de la pente locale horizontale ($\varepsilon_h$) au dit point (2031) et de l'inclinaison ($\theta$) du vitrage (201, 104) ;

   - établissement d'une carte de corrections angulaires comportant, pour chaque point (2031) de l'ensemble de points (2031), le décalage angulaire vertical ($\delta_v$) et le décalage angulaire horizontal ($\delta_h$) calculés pour ledit point (2031, 105).

2. Procédé (100) selon la revendication 1, **caractérisé en ce qu'**il comporte en outre une étape (1051) de complétion de la carte de corrections angulaires par calcul du décalage angulaire vertical ($\delta_v$) et du décalage angulaire horizontal ($\delta_h$) d'une pluralité de points du vitrage (201) n'appartenant pas à l'ensemble de points (2031), le calcul étant réalisé à partir de pentes locales horizontales ($\varepsilon_h$) et de pentes locales verticales ($\varepsilon_v$) obtenues par interpolation à partir des pentes locales horizontales ($\varepsilon_h$) et des pentes locales verticales ($\varepsilon_v$) calculées pour l'ensemble de points (2031).

3. Procédé (100) selon l'une quelconque des revendications précédentes, **caractérisé en ce que** l'étape (101) de détermination de l'épaisseur locale est réalisée par une mesure directe d'épaisseur ou par différenciation d'une première mesure de surface réalisée sur la surface libre interne (2011) du vitrage (201) et d'une seconde mesure de surface réalisée sur la surface libre externe (2012) du vitrage (201).

4. Procédé (100) selon la revendication 3, **caractérisé en ce que** l'étape (101) de détermination de l'épaisseur locale est réalisée par mesure optique sans contact.

5. Procédé (100) selon la revendication 4, **caractérisé en ce que** l'étape (101) de détermination de l'épaisseur locale est réalisée par mesure de front d'onde, déflectométrie ou profilométrie confocale.

6. Procédé (100) selon la revendication 3, **caractérisé en ce que** l'étape (101) de détermination de l'épaisseur locale est réalisée par mesure de distorsion optique en transmission.

7. Procédé (100) selon l'une quelconque des revendications précédentes, **caractérisé en ce que** le décalage angulaire vertical ($\delta_v$) et le décalage angulaire horizontal ($\delta_h$) sont calculés par les formules suivantes :

$$\begin{cases} \delta_v = A_{vv}\varepsilon_v + A_{hv}\varepsilon_h \\ \delta_h = A_{vh}\varepsilon_v + A_{hh}\varepsilon_h \end{cases}$$

Avec $A_{vv}$, $A_{hv}$, $A_{vh}$, $A_{hh}$, des coefficients dépendant de la composante verticale ($\alpha_v$) et de la composante horizontale ($\alpha_h$) de l'angle d'émission ($\alpha$) de l'onde lumineuse destinée à traverser le vitrage (201) audit point (2031) et de l'inclinaison ($\theta$) du vitrage (201).

8. Procédé (100) selon l'une quelconque des revendications précédentes, **caractérisé en ce que** les étapes de détermination de l'épaisseur locale, d'obtention des pentes locales horizontale et verticale, de calcul d'un décalage angulaire vertical, de calcul d'un décalage angulaire horizontal et d'établissement d'une carte de corrections angulaires (101, 102, 103, 104, 105) et même l'étape optionnelle (1051) de complétion de la carte de corrections angulaires sont réalisées avant installation du LIDAR (202) en définissant un point d'impact de référence théorique ($O_{ref}$) associé à un angle d'émission de référence ($\alpha_{ref}$).

9. Procédé selon la revendication 8, **caractérisé en ce qu'**il comprend une étape (1060) de formation d'un point de mise en référence ($O_{ref}$) sur la surface libre interne (2011) du vitrage (201) sous forme d'un marquage correspondant au point d'impact de référence théorique ($O_{ref}$).

10. Procédé (100) selon la revendication 9, **caractérisé en ce que** si, après l'installation du LIDAR (202), il existe un décalage entre le point de mise en référence ($O_{ref}$) et un point d'impact de référence réel ($O_{LIDAR}$) d'une onde lumineuse émise à l'angle d'émission de référence par le LIDAR, le procédé (100) comporte une étape (1061) de mise en coïncidence du point d'impact de référence réel ($O_{LIDAR}$) et du point de mise en référence ($O_{ref}$).

11. Procédé (100) selon la revendication 9, **caractérisé en ce que** si, après l'installation du LIDAR (202), il existe un décalage entre le point de mise en référence ($O_{ref}$) et un point d'impact de référence réel ($O_{LIDAR}$) d'une onde lumineuse émise à l'angle d'émission de référence par le LIDAR, le procédé (100) comporte une étape (1062) de recalage de la carte de corrections angulaires par application d'une translation (v).

12. Procédé (100) selon la revendication 11, **caractérisé en ce que** la translation (v) a une valeur égale à l'écart entre la position du point de mise en référence ($O_{ref}$) et la position du point d'impact de référence ($O_{LIDAR}$) sur la surface libre interne (2011) du vitrage (201).

13. Vitrage (201) de véhicule apte à laisser passer des ondes lumineuses émises par un LIDAR (202), notamment dans l'infrarouge, le vitrage (201) comportant un moyen de stockage (2014) configuré pour stocker une carte de corrections angulaires établie via le procédé (100) selon l'une quelconque des revendications précédentes pour le vitrage (201).

14. Vitrage (201) selon la revendication 13, **caractérisé en ce que** le moyen de stockage (2014) est une matrice de données ou un code-barre qui renvoie à une base de données.

15. Système comportant un vitrage selon l'une quelconque des revendications 13 à 14 et un LIDAR configuré pour émettre des ondes lumineuses traversant le vitrage (201).

16. Véhicule comportant un vitrage (201) selon l'une quelconque des revendications 13 à 14 ou un système selon la revendication 15.

**Patentansprüche**

1. Verfahren (100) zum Analysieren einer Fahrzeugverglasung für eine Korrektur, die für die Verwendung mit einem LIDAR (202) vorgesehen ist, der zum Emittieren von Lichtwellen konfiguriert ist, wobei die Verglasung (201) eine innere freie Oberfläche (2011), die dem Fahrzeuginneren zugewandt ist, und eine äußere freie Oberfläche (2012) aufweist, die der Fahrzeugaußenseite zugewandt ist, wobei jede Lichtwelle dazu vorgesehen ist, die Verglasung (201) zu durchdringen, und durch einen gegebenen Auftreffpunkt (2032) auf der inneren freien Oberfläche definiert ist, wobei die innere freie Oberfläche eine Oberflächenebene mit einer gegebenen Neigung ($\theta$) relativ zu einer horizontalen Ebene (P) definiert, die eine horizontale Achse (X) aufweist, wobei die horizontale Achse (X) senkrecht zu einer vertikalen Achse (Y) und zu einer in der Oberflächenebene enthaltenen Normalenachse (Y') verläuft, wobei das Verfahren die folgenden Schritte aufweist:

   - für jeden Punkt (2031) einer Gruppe von Punkten (2031) der Verglasung (201):

      ∘ Bestimmen einer lokalen Dicke der Verglasung (201) an dem Punkt (2031, 101);
      ∘ Erhalten, durch digitale Verarbeitung, einer lokalen horizontalen Steigung ($\varepsilon_h$) und einer lokalen vertikalen Steigung ($\varepsilon_v$) an dem Punkt (2031), aus der lokalen Dicke an dem Punkt (2031, 102);
      ∘ Berechnen einer vertikalen Winkelverschiebung ($\delta_v$) in Abhängigkeit von einer vertikalen Komponente ($\alpha_v$) des Emissionswinkels ($\alpha$) der Lichtwelle, die dazu vorgesehen ist, die Verglasung (201) an dem Punkt (2031) zu durchdringen, der lokalen vertikalen Steigung ($\varepsilon_v$) an dem Punkt (2031) und der Neigung ($\theta$) der Verglasung (201, 103);
      ∘ Berechnung einer horizontalen Winkelverschiebung ($\delta_h$) in Abhängigkeit von einer horizontalen Komponente ($\alpha_h$) des Emissionswinkels ($\alpha$) der Lichtwelle, die dazu vorgesehen ist, die Verglasung (201) an dem Punkt (2031) zu durchdringen, der lokalen horizontalen Steigung ($\varepsilon_h$) an dem Punkt (2031) und der Neigung ($\theta$) der Verglasung (201, 104);

   - Erstellen einer Winkelkorrekturkarte, die für jeden Punkt (2031) der Gruppe von Punkten (2031) die vertikale Winkelverschiebung ($\delta_v$) und die horizontale Winkelverschiebung ($\delta_h$) aufweist, die für den Punkt (2031, 105) berechnet wurden.

2. Verfahren (100) nach Anspruch 1, **dadurch gekennzeichnet, dass** es ferner einen Schritt (1051) zum Vervollständigen der Winkelkorrekturkarte durch Berechnen der vertikalen Winkelverschiebung ($\delta_v$) und der horizontalen Winkelverschiebung ($\delta_h$) einer Vielzahl von Punkten der Verglasung (201) aufweist, die nicht zu der Gruppe von Punkten (2031) gehören, wobei das Berechnen anhand lokaler horizontaler Steigungen ($\varepsilon_h$) und lokaler vertikaler Steigungen ($\varepsilon_v$) durch Interpolation aus den lokalen horizontalen Steigungen ($\varepsilon_h$) und den lokalen vertikalen Steigungen ($\varepsilon_v$) ausgeführt wird, die für die Gruppe von Punkten (2031) berechnet wurden.

3. Verfahren (100) nach einem der vorstehenden Ansprüche, **dadurch gekennzeichnet, dass** der Schritt (101) zum Bestimmen der lokalen Dicke durch eine direkte Dickenmessung oder durch Differenzierung einer ersten Oberflächenmessung an der inneren freien Oberfläche (2011) der Verglasung (201) und einer zweiten Oberflächenmessung an der äußeren freien Oberfläche (2012) der Verglasung (201) ausgeführt wird.

4. Verfahren (100) nach Anspruch 3, **dadurch gekennzeichnet, dass** der Schritt (101) zum Bestimmen der lokalen Dicke durch berührungslose optische Messung ausgeführt wird.

5. Verfahren (100) nach Anspruch 4, **dadurch gekennzeichnet, dass** der Schritt (101) zum Bestimmen der lokalen Dicke durch Wellenfrontmessung, Deflektometrie oder konfokaler Profilometrie ausgeführt wird.

6. Verfahren (100) nach Anspruch 3, **dadurch gekennzeichnet, dass** der Schritt (101) zum Bestimmen der lokalen Dicke durch Messung der optischen Verzerrung bei der Übertragung ausgeführt wird.

7. Verfahren (100) nach einem der vorstehenden Ansprüche, **dadurch gekennzeichnet, dass** die vertikale Winkelverschiebung ($\delta_v$) und die horizontale Winkelverschiebung ($\delta_h$) anhand der folgenden Formeln berechnet werden:

$$\begin{cases} \delta_v = A_{vv}\varepsilon_v + A_{hv}\varepsilon_h \\ \delta_h = A_{vh}\varepsilon_v + A_{hh}\varepsilon_h \end{cases}$$

Mit $A_{vv}$, $A_{hv}$, $A_{vh}$, $A_{hh}$, Koeffizienten, die von der vertikalen Komponente ($\alpha_v$) und der horizontalen Komponente ($\alpha_h$) des Emissionswinkels ($\alpha$) der Lichtwelle, die dazu vorgesehen ist, die Verglasung (201) an dem Punkt (2031) zu durchdringen, und der Neigung ($\theta$) der Verglasung (201) abhängig sind.

8. Verfahren (100) nach einem der vorstehenden Ansprüche, **dadurch gekennzeichnet, dass** die Schritte zum Bestimmen der lokalen Dicke, zum Erhalten der lokalen horizontalen und der lokalen vertikalen Steigung, zum Berechnen einer vertikalen Winkelverschiebung, zum Berechnen einer horizontalen Winkelverschiebung und zum Erstellen einer Winkelkorrekturkarte (101, 102, 103, 104, 105) und sogar der optionale Schritt (1051) zum Vervollständigen der Winkelkorrekturkarte vor dem Installieren des LIDAR (202) durch Definieren eines theoretischen Referenzauftreffpunkts ($O_{ref}$), der mit einem Referenzemissionswinkel ($\alpha_{ref}$) verknüpft ist, ausgeführt werden.

9. Verfahren nach Anspruch 8, **dadurch gekennzeichnet, dass** es einen Schritt (1060) zum Bilden eines Referenzpunktes ($O_{ref}$) auf der inneren freien Oberfläche (2011) der Verglasung (201) in Form einer Markierung umfasst, die dem theoretischen Referenzauftreffpunkt ($O_{ref}$) entspricht.

10. Verfahren (100) nach Anspruch 9, **dadurch gekennzeichnet, dass,** wenn nach dem Installieren des LIDAR (202) eine Verschiebung zwischen dem Referenzpunkt ($O_{ref}$) und einem realen Referenzauftreffpunkt ($O_{LIDAR}$) einer von dem LIDAR unter dem Referenzemissionswinkel emittierten Lichtwelle besteht, das Verfahren (100) einen Schritt (1061) zum Abgleichen des realen Referenzauftreffpunkts ($O_{LIDAR}$) und des Bezugspunkts ($O_{ref}$) aufweist.

11. Verfahren (100) nach Anspruch 9, **dadurch gekennzeichnet, dass,** wenn nach dem Installieren des LIDAR (202) eine Verschiebung zwischen dem Referenzpunkt ($O_{ref}$) und einem realen Referenzauftreffpunkt ($O_{LIDAR}$) einer von dem LIDAR unter dem Referenzemissionswinkel emittierten Lichtwelle besteht, das Verfahren (100) einen Schritt (1062) des Neueinstellens der Winkelkorrekturkarte durch Anwenden einer Translation (v) aufweist.

12. Verfahren (100) nach Anspruch 11, **dadurch gekennzeichnet, dass** die Translation (v) einen Wert hat, der gleich der Differenz zwischen der Position des Referenzpunkts ($O_{ref}$) und der Position des Referenzauftreffpunkts ($O_{LIDAR}$) auf der inneren freien Oberfläche (2011) der Verglasung (201) ist.

13. Fahrzeugverglasung (201), die geeignet ist, Lichtwellen, die von einem LIDAR (202) emittiert werden, insbesondere im Infrarotbereich, durchzulassen, wobei die Verglasung (201) ein Speichermittel (2014) aufweist, das konfiguriert ist, um eine Winkelkorrekturkarte zu speichern, die über das Verfahren (100) nach einem der vorstehenden Ansprüche für die Verglasung (201) erstellt wurde.

14. Verglasung (201) nach Anspruch 13, **dadurch gekennzeichnet, dass** das Speichermittel (2014) eine Datenmatrix oder ein Barcode ist, der auf eine Datenbank verweist.

15. System mit einer Verglasung nach einem der Ansprüche 13 bis 14 und einem LIDAR, der konfiguriert ist, um Lichtwellen zu emittieren, die die Verglasung (201) durchdringen.

16. Fahrzeug mit einer Verglasung (201) nach einem der Ansprüche 13 bis 14 oder einem System nach Anspruch 15.

## Claims

1. A method (100) for analyzing a glazing of a vehicle for a correction intended to be used for a LiDAR (202) configured to emit light waves, the glazing (201) comprising an internal free surface (2011) toward the interior of the vehicle and an external free surface (2012) toward the exterior of the vehicle, each light wave being intended to pass through the glazing (201) and being defined by a given point of impact (2032) on the internal free surface, the internal free surface defining a surface plane having a given inclination ($\theta$) relative to a horizontal plane (P) having a horizontal axis (X), the horizontal axis (X) being perpendicular to a vertical axis (Y) and to a normal axis (Y') included in the surface plane, the method comprising the following steps:

- for each point (2031) of a set of points (2031) of the glazing (201):

  ◦ determining a local thickness of the glazing (201) at said point (2031, 101) ;
  ◦ obtaining by digital processing, a horizontal local slope ($\varepsilon_h$) and a vertical local slope ($\varepsilon_v$) at said point (2031), from the local thickness at said point (2031, 102);
  ◦ calculating a vertical angular offset ($\delta_v$) based on a vertical component ($\alpha_v$) of an emission angle ($\alpha$) of the light wave intended to pass through the glazing (201 at said point (2031), of the vertical local slope ($\varepsilon_v$) at said point (2031) and of the inclination ($\theta$) of the glazing (201, 103) ;
  ◦ calculating a horizontal angular offset ($\delta_h$) based on a horizontal component ($\alpha_h$) of the emission angle ($\alpha$) of the light wave intended to pass through the glazing (201) at said point (2031), of the horizontal local slope ($\varepsilon_h$) at said point (2031) and of the inclination ($\theta$) of the glazing (201, 104) ;

  - establishing an angular correction map comprising, for each point (2031) of the set of points (2031), the vertical angular offset ($\delta_v$) and the horizontal angular offset ($\delta h$) calculated for said point (2031, 105).

2. The method (100) according to claim 1, **characterized in that** it further comprises a step (1051) of completion of the angular correction map by calculating the vertical angular offset ($\delta_v$) and the horizontal angular offset ($\delta_h$) of a plurality of points of the glazing (201) not belonging to the set of points (2031), the calculation being carried out from horizontal local slopes ($\varepsilon_h$) and vertical local slopes ($\varepsilon_v$) obtained by interpolation from horizontal local slopes ($\varepsilon_h$) and vertical local slopes ($\varepsilon_v$) calculated for the set of points (2031).

3. The method (100) according to either one of the preceding claims, **characterized in that** the step (101) of determining the local thickness is carried out by a direct measurement of thickness or by differentiation of a first surface measurement carried out on the internal free surface (2011) of the glazing (201) and a second surface measurement carried out on the external free surface (2012) of the glazing (201).

4. The method (100) according to claim 3, **characterized in that** the step (101) of determining the local thickness is carried out by contactless optical measurement.

5. The method (100) according to claim 4, **characterized in that** the step (101) of determining the local thickness is carried out by wavefront measurement, deflectometry or confocal profilometry.

6. The method (100) according to claim 3, **characterized in that** the step (101) of determining the local thickness is carried out by optical transmission distortion measurement.

7. The method (100) according to any one of the preceding claims, **characterized in that** the vertical angular offset ($\delta_v$) and the horizontal angular offset ($\delta_h$) are calculated by the following formulas:

$$\begin{cases} \delta_v = A_{vv}\varepsilon_v + A_{hv}\varepsilon_h \\ \delta_h = A_{vh}\varepsilon_v + A_{hh}\varepsilon_h \end{cases}$$

With $A_{vv}$, $A_{hv}$, $A_{vh}$, $A_{hh}$, coefficients dependent on the vertical component ($\alpha_v$) and on the horizontal component ($\alpha_h$) of the angle of emission ($\alpha$) of the light wave intended to pass through the glazing (201) at said point (2031) and on the inclination ($\theta$) of the glazing (201).

8. The method (100) according to any one of the preceding claims, **characterized in that** the steps of determining the local thickness, of obtaining horizontal and vertical local slopes, of calculating a vertical angular offset, of calculating a horizontal angular offset and of establishing an angular correction map (101, 102, 103, 104, 105) and even the optional step (1051) of completion of the angular correction map are carried out prior to the installation of the LiDAR (202) by defining a theoretical reference point of impact ($O_{ref}$) associated with a reference angle of emission ($\alpha_{ref}$).

9. The method according to claim 8, **characterized in that** it comprises a step (1060) of forming a referencing point ($O_{ref}$) on the internal free surface (2011) of the glazing (201) in the form of a mark corresponding to the theoretical reference point of impact ($O_{ref}$).

10. The method (100) according to claim 9, **characterized in that**, if, after installation of the LiDAR (202), there is an offset between the referencing point ($O_{ref}$) and a real reference point of impact ($O_{LiDAR}$) of a light wave emitted at the reference angle of emission by the LiDAR, the method (100) comprises a step (1061) of aligning the real reference point of impact ($O_{LiDAR}$) and the referencing point ($O_{ref}$).

11. The method (100) according to claim 9, **characterized in that** if, after installation of the LiDAR (202), there is an offset between the referencing point ($O_{ref}$) and a real reference point of impact ($O_{LiDAR}$) of a light wave emitted at the reference angle of emission by the LiDAR, the method (100) comprises a step (1062) of recalibrating the angular correction map by application of a translation (v).

12. The method (100) according to claim 11, **characterized in that** the translation (v) has a value equal to the difference between the position of the referencing point ($O_{ref}$) and the position of the reference point of impact ($O_{LiDAR}$) on the internal free surface (2011) of the glazing (201).

13. A vehicle glazing (201) capable of allowing the passage of light waves emitted by a LiDAR (202), particularly in the infrared, the glazing (201) comprising a storage means (2014) configured to store an angular correction map established via the method (100) according to any one of the preceding claims for the glazing (201).

14. The glazing (201) according to claim 13, **characterized in that** the storage means (2014) is a datamatrix or a barcode that links to a database.

15. A system comprising a glazing according to any one of claims 13 to 14 and a LiDAR configured to emit light waves passing through the glazing (201).

16. A vehicle comprising a glazing (201) according to any one of claims 13 to 14 or a system according to claim 15.

[Fig. 1]

[Fig. 2]

[Fig. 3]

[Fig. 4]

[Fig. 5]

[Fig. 6]

[Fig. 7]

[Fig. 8]

[Fig. 9]

**RÉFÉRENCES CITÉES DANS LA DESCRIPTION**

**Documents brevets cités dans la description**

- WO 2018115090 A
- DE 102017003634
- US 6132882 A
- WO 04025334 A